# EUROPEAN PATENT APPLICATION

(11) **EP 4 756 367 A1**
(43) Date of publication of application: **10.06.2026**
(21) Application number: 24217327.6
(22) Date of filing: 04.12.2024
(51) Int. Cl.: G01C 1/04, G01C 15/10

(54) **SURVEYING INSTRUMENT**

(71) Applicant: Trimble Inc, Westminster CO 80021 (US)
(72) Inventor: CLAESON, Jonas, Westminster, 80021 (US); NORDENFELT, Mikael, Westminster, 80021 (US)
(74) Representative: AWA Sweden AB

(57) **Abstract**

The present disclosure provides a surveying instrument (100). The surveying instrument comprises a center unit (110) comprising an optical device (120) and a front lens (112). The optical device is arranged to emit and/or receive light through the front lens along an optical axis (OA) of the center unit. The surveying instrument further comprises an alidade (130) on which the center unit is rotatably arranged about a first axis (A1). The alidade comprises a tilt sensor (132) arranged along a second axis (A2). The second axis is orthogonal to the first axis. The alidade further comprises an optical arrangement (134) arranged to form an optical path (136) from a first side of the alidade to an aperture (138) arranged along the second axis at a second side of the alidade. The optical path bypasses the tilt sensor. The center unit is rotatable about the first axis to a predetermined rotational position (P1), in which the optical axis aligns with the optical path such that the optical device is arranged to emit and/or receive light through the aperture along the second axis.

## Description

### Technical field

The present disclosure relates generally to the field of land surveying and/or distance measurement applications. In particular, the present disclosure relates to a surveying instrument.

### Background

The art of surveying involves the determination of unknown positions, surfaces or volumes of objects using measurements of angles and distances. In order to make these measurements, a surveying instrument often comprises an electronic distance measurement unit (EDM unit) and other optical elements for making measurements of or at a distant target. Preferably, the surveying instrument calculates the position of a target in a coordinate system, e.g., a fixed ground-based coordinate system. The surveying instrument often measures the position of the target relative to its own position. Thus, in order to define the position of the target in a ground-based coordinate system, the position or location of the surveying instrument in the fixed ground-based coordinate system needs to be known. Therefore, an important part of the setup of the surveying instrument is to position or determine a location of the surveying instrument with respect to the ground.

Conventional methods and instruments may use an optical plummet, a camera plummet, or a laser plummet to position the surveying instrument. An optical plummet allows a user to use his/her eye to identify a nadir of the surveying instrument on the ground, i.e., a point vertically below the surveying instrument. A camera plummet may comprise an image sensor mounted on the bottom part of the surveying instrument to provide an image in which the position of a vertical axis of the surveying instrument on the ground may be identified. A laser plummet projects a laser dot onto the ground vertically below the surveying instrument. The optical plummet, the camera plummet or the laser plummet may thereby aid a user to find the location of the vertical axis of the surveying instrument on the ground. By this, a user may adjust a position of the surveying instrument to align with, e.g., a reference mark on the ground. Commonly, after positioning the surveying instrument with respect to the ground, the height of the surveying instrument above the ground is determined using a measurement tape or similar.

One drawback with the conventional methods and systems mentioned above is that they may be cumbersome to use and have a limited accuracy. For example, the accuracy of a measurement using a measurement tape is limited, which in turn decreases the accuracy of the measurements later made by the surveying instrument. Therefore, there is a need for a facilitated and more efficient way to accurately position the surveying instrument and to accurately measure the height of the surveying instrument above the ground.

### Summary

It is therefore an object of the present disclosure to overcome at least some of the above-mentioned drawbacks, and to provide a more efficient alternative to the above-mentioned solutions and prior art. More specifically, it is an object of the present disclosure to provide an improved surveying instrument allowing more efficient positioning or localizing of the surveying instrument in relation to the ground. Another object of the present disclosure is to provide a surveying instrument for facilitating the measurement of the height of the surveying instrument above the ground.

This and other objects are achieved by means of a surveying instrument as defined in the appended independent claim. Other embodiments are defined by the dependent claims.

According to the present disclosure, a surveying instrument is provided. The surveying instrument comprises a center unit comprising an optical device and a front lens. The optical device is arranged to emit and/or receive light through the front lens along an optical axis of the center unit. The surveying instrument further comprises an alidade on which the center unit is rotatably arranged about a first axis. The alidade comprises a tilt sensor arranged along a second axis. The second axis is orthogonal to the first axis. The alidade further comprises an optical arrangement arranged to form an optical path from a first side of the alidade to an aperture arranged along the second axis at a second side of the alidade. The optical path bypasses, or circumvents, the tilt sensor. The center unit is rotatable about the first axis to a predetermined rotational position, in which the optical axis aligns with the optical path such that the optical device is arranged to emit and/or receive light through the aperture along the second axis.

The present disclosure relates to the idea of providing a surveying instrument that may facilitate and/or improve positioning of a surveying instrument within land surveying and/or distance and angle measurement applications. The surveying instrument may be employed in systems or devices used for land surveying or distance and angle measurements.

The surveying instrument comprises a center unit having an optical axis. The front lens is arranged along the optical axis of the center unit. The optical device may be arranged in the center unit. The center unit may be aimed at a target, for example during distance measurements. The optical axis of the center unit may be referred to as the line of sight of the center unit or the surveying instrument. Within surveying, a center unit may also be referred to as a telescope, or the center unit may comprise a telescope. The center unit may be arranged or mounted on the alidade for rotation around the first axis of the surveying instrument. The first axis may be a horizontal axis of the surveying instrument, that is, during operation the first axis may be arranged horizontally. The first axis may be referred to as the pitch axis or the trunnion axis.

The tilt sensor is arranged, positioned, or mounted in the alidade along the second axis of the surveying instrument. The second axis may be a vertical axis of the surveying instrument, that is, during operating the second axis may be arranged vertically. Arranging the tilt sensor along the second axis may improve the functionality of the tilt sensor. The tilt sensor may determine, measure, or detect a tilt angle (inclination) of the second axis of the surveying instrument relative to a vertical line of gravity. The tilt sensor may be used to level the surveying instrument. That is, the tilt sensor may be used to set or adjust the surveying instrument in a horizontal position such that a horizontal plane of the surveying instrument is perpendicular to the vertical line of gravity. Leveling may be a part of the setup of the surveying instrument. For some applications, correct levelling of the surveying instrument may be required before, for example, positioning of the surveying instrument and/or measuring the height of the surveying instrument. After levelling of the surveying instrument, the second axis of the surveying instrument may align with a vertical line of gravity.

The alidade may be mounted or arranged on a base or a stand for rotation about the second axis, for example based on the application of the surveying instrument. The optical arrangement of the alidade may comprise one or more optical elements, components, or parts. The one or more optical elements, components, or parts may comprise lenses, reflective surfaces, mirrors, windows, optical flats, and/or prisms. The optical arrangement forms, creates, or comprises the optical path between the first side of the alidade and the second side of the alidade. The optical arrangement may allow for transmission or guidance of light through the alidade. The optical arrangement may lead, guide or direct light from the first side of the alidade to the second side of the alidade or vice versa. The alidade comprises an aperture arranged or positioned at the second side. The aperture may be centered on the second axis, e.g., along the (vertical) central axis of the surveying instrument. The first side may comprise a (further) aperture, an opening, or a window configured to transmit light through the first side of the alidade. The optical path may extend between the first side of the alidade and the aperture at the second side of the alidade. The optical path bypasses the tilt sensor, that is, the optical path may be arranged to avoid, by going around, the tilt sensor.

The center unit may be rotated, moved and/or angled around the first axis in different rotational positions. For example, during distance and/or surveying measurements, the center unit may be rotated and/or angled such that its line of sight is directed towards a target. The rotation of the center unit may be performed manually, e.g., by an operator of the surveying instrument, and/or automatically, e.g., by a control unit, a motor, and/or an actuator comprised in the surveying instrument.

In an example rotational position, if the center unit were to be angled such that the line of sight, or optical axis, aligns with the second axis in a direction toward the alidade, the front lens may face or may be directed towards the tilt sensor. Thus, the tilt sensor may block or be in the way of a free path for the light when the center unit is in the example rotational position. Thus, with the tilt sensor positioned along the second axis, the center unit may be blocked from making measurements along the second axis not only by the alidade itself, but by the tilt sensors position in the alidade. It will be appreciated that, in some embodiments, the rotation of the center unit about the first axis may be limited, such that the center unit is prevented from reaching the example rotational position. In such embodiments, the example rotational position may be a theoretical position describing the relation between the first axis, the optical axis, the second axis and the tilt sensor.

In the predetermined rotational position, the optical axis of the center unit aligns with the optical path formed in the alidade. In an example, in the predetermined rotational position, the center unit is angled such that the front lens, and thus the optical axis, is directed towards the first side of the alidade. For example, the front lens may be directed towards an optical element of the optical arrangement, in the alidade, such that the optical axis of the center unit aligns with the optical path. In the predetermined rotational position, the optical device may emit and/or receive light via the optical path, through the aperture at the second side of the alidade, and along the second axis. In other words, the optical path may allow for light emitted or received by the optical device to bypass the tilt sensor. The predetermined rotational position may allow for light to be emitted by the optical device along the optical axis, guided along the optical path and to exit the alidade at the aperture, along the second axis. The predetermined rotational position may allow for light which enters the aperture along the second axis to be guided from the aperture of the alidade, along the optical path and along the optical axis of the center unit to be received by the optical device.

The predetermined rotational position may for example correspond to an angle of the center unit and/or the optical axis relative to the second axis. The surveying instrument may comprise a control unit that may be configured to rotate, move and/or angle the center unit to a rotational position, such as the predetermined rotational position.

In an example, the surveying instrument may comprise indicators or markings to identify the predetermined rotational position of the center unit about the first axis, such as markings on the center unit and the alidade which align when the center unit is in the predetermined rotational position. For embodiments allowing automatic rotation of the center unit, the predetermined rotational position may be pre-set or pre-programmed, e.g., during production of the surveying instrument and/or by a user of the surveying instrument, such that the center unit may move to the predetermined rotational position upon receiving an instruction.

In an example surveying operation, the surveying instrument may be arranged and/or placed above a surface, e.g., a ground surface, such that the aperture at the second side of the alidade faces the surface. The surveying instrument may be levelled by using the tilt sensor such that the second axis is parallel with a vertical axis of gravity. The optical device comprised in the center unit may be used to position the surveying instrument above the surface. To do so, the center unit may be rotated to the predetermined rotational position. By this, the optical device may emit and/or receive light along the second axis of the surveying instrument. For example, the optical device may emit light along the optical axis and the optical path, through the aperture and towards the surface, e.g., the ground surface. The light emitted by the optical device may be projected on the surface to indicate a position where the second axis intersects the surface. Thus, the light projected on the surface may be used to position the surveying instrument, e.g., relative a mark, a point, a reference point, and/or a nail provided on the surface.

Alternatively, or additionally, the optical device may receive light from the surface, e.g., the ground surface, through the aperture in the alidade, along the optical path and the optical axis. The light received by the optical device may be processed, converted and/or formed to, for example, an image. The received light, for example represented in an image, may be used to position the surveying instrument relative a reference point provided on the surface. For example, the reference point on the ground may be captured and/or seen in the image and the surveying instrument may be positioned based on the reference point in the image.

A marking, point or nail on the ground, as mentioned above, or similar, may represent a predefined position in a reference frame, such as a global or a local reference frame. Thus, surveying measurements made by the surveying instrument at a position aligned with such a mark, may be used to position, or measure a target or point of interest in relation to such a reference frame.

A surveying instrument may also be referred to as a geodetic instrument or a total station. Furthermore, throughout the application, the terms "position" and "location" will also be used interchangeably.

The surveying instrument of the present disclosure may allow for positioning of the surveying instrument and/or making measurements along the second axis, using the optical device. The surveying instrument of the present disclosure may allow optical devices in the center unit to emit and/or receive light along the second axis by bypassing the tilt sensor.

Thus, the surveying instrument of the present disclosure may use the optical device which is built into and/or arranged in the center unit for measurements relating to surveying as well as measurements relating to positioning of the surveying instrument. The optical arrangement of the alidade may allow for modulation of the light from and/or towards the optical device such that the center unit, which is adapted for emitting and/or receiving light towards and/or from a distant target, i.e., along the line of sight, also can be used to emit and/or receive light along the second axis of the surveying instrument. The surveying instrument of the present disclosure may thus allow for positioning and/or distance measurements by using the built-in optical device comprised in the center unit. This may allow for a more compact instrument having fewer components.

According to some embodiments, the optical device may comprise a laser source configured to emit a laser beam.

The laser source may be arranged in the center unit. The laser source may emit light of a desired wavelength range depending on the application of the surveying instrument. The laser source may emit laser pulses or a continuous laser beam. The laser beam may be emitted through the front lens along the optical axis of the center unit. The laser source may be used during measurements related to surveying, wherein the laser beam is directed towards a distant target. In the predetermined rotational position, the laser source may emit a laser beam through the front lens of the center unit, through the optical arrangement of the alidade, through the aperture in the alidade and along the second axis.

In an example, the surveying instrument may be arranged and/or placed above a surface, e.g., a ground surface, as described above. In the predetermined rotational position of the center unit, the laser beam may be projected on the surface below the surveying instrument and the laser source may thereby act as a laser plummet for projecting the second axis on the surface. If the surveying instrument is levelled, the second axis and the vertical line of gravity align, thus, the laser source may act as a laser plummet. The laser beam projected onto the surface, for example as a laser dot, along the second axis of the surveying instrument, may facilitate positioning of the surveying instrument in relation to a reference point and/or a mark provided on the surface. For example, the surveying instrument may be positioned such that the laser dot is projected onto (the center) of the reference point.

The laser beam, emitted along the second axis may clearly and accurately indicate a position of the second axis to, e.g., a user of the surveying instrument. This may thereby aid the user to find the location of the second axis on the surface, e.g., the ground surface, during positioning. Furthermore, since the laser source is comprised in the optical device in the center unit, the laser source may be used for positioning and measurements along the second axis of the surveying instrument, as well as other surveying measurements. For example, a laser beam emitted along the optical axis may indicate a point towards which the surveying instrument is aimed. By using a laser source built into the center unit for positioning, the need for an additional and/or separate laser plummet arranged on the surveying instrument may be removed. This may further result in a more compact instrument and reduce manufacturing costs.

According to some embodiments, the laser source may form part of an electronic distance measurement, EDM, unit configured to measure a distance between the surveying instrument and an object based on the emitted laser beam.

The EDM unit may comprise a laser source and a receiver (sensor/detector). The receiver may be configured to receive light through the front lens along the optical axis of the center unit. For example, a laser beam emitted by the EDM unit may be directed towards an object, and as the laser beam reaches the object, at least a part of the laser beam may be reflected back towards the surveying instrument as a reflected laser beam. The EDM unit may be configured to measure a distance between the surveying instrument and the object based on the emitted laser beam and the reflected laser beam detected by the receiver.

The EDM unit may emit a laser beam and/or laser pulses towards a target or an object, which then are reflected back towards the surveying instrument. Based on the reflected laser beam and/or laser pulses, a distance between the surveying instrument and the target or object may be determined.

For example, if the surveying instrument is arranged above a surface, e.g., a ground surface, the EDM unit may measure a distance between the surveying instrument and a mark on the ground based on measurements made by emitting and receiving a laser beam while the center unit is in the predetermined rotational position.

The laser source, forming part of the EDM unit, may further act as a laser plummet for positioning the surveying instrument. The EDM unit may also measure a distance between the surveying instrument and an object, such as the distance between the surveying instrument and a distant target or the distance between the surveying instrument and a ground mark. By this, positioning of the surveying instrument as well as distance measurements may be made using the EDM unit which is built into the center unit. The surveying instrument according to the present embodiment may provide positioning of the surveying instrument and/or measurements, such as distance measurements, along the second axis using a reduced amount of hardware. For example, the present surveying instrument may remove the need for additional or external hardware for positioning the surveying instrument and/or making distance measurements between the surveying instrument and a ground surface, such as a separate laser source or a measurement tape.

According to some embodiments, the center unit may be configured to perform a rotation about the first axis across the predetermined rotational position such that the laser beam emitted by the laser source may be transmitted through the optical path and emitted through the aperture in an angular range across the second axis. The EDM may be configured to perform a plurality of distance measurements during the rotation of the center unit to provide a surface profile of the object.

The center unit may be rotated about the first axis such that the front lens and/or the optical axis of the center unit may pass by or move across the predetermined rotational position. The center unit may perform a rotation about the first axis such that the front lens and/or the optical axis of the center unit may sweep over or across the predetermined rotational position. As the center unit performs such a rotation across the predetermined rotational position, the laser beam from the laser source of the EDM unit may be transmitted though the optical arrangement in the alidade and exit the aperture as a sweep in an angular range across the second axis. The laser beam may thereby move in an angular range across the second axis. During the rotation about the first axis across the predetermined rotational position, the laser source may emit a laser beam and/or laser pulses through the aperture in the alidade in an angular range across the second axis. The EDM unit may be configured to perform a plurality of distance measurements during the rotation of the center unit based on the emitted laser beam and/or laser pulses.

In an example, the laser source may emit a sequence of laser pulses during a rotation of the center unit across the predetermined rotational position. The sequence of laser pulses may be reflected by an object back towards the aperture in the alidade, thereby reaching the receiver of the EDM unit. By this, the EDM unit may be configured to perform a plurality of distance measurements during the rotation of the center unit based on the sequence of laser pulses such that a surface profile of the object may be determ ined/obtained.

It may for example be difficult to determine a ground level in relation to ground mark protruding from a ground surface, such as a pipe extending from the ground. As described earlier, the center unit may be moved and/or rotated about the first axis to rotate across the predetermined rotational position. Thus, a laser beam emitted by the laser source of the EDM unit may be emitted from the aperture (or swept) in an angular range including the second axis. Thereby, the laser beam may be swept in a limited range across the ground surface. Thus, a surface profile of the ground surface, including, e.g., a cylindrical pipe protruding from the ground (a cylindrical ground mark), may be measured by performing a plurality of distance measurements (or a "scan") across the ground mark and the surrounding ground surface. The plurality of distance measurements may create or determine a surface profile. The surface profile may be used to identify and/or determine a ground level, from which a distance between the surveying instrument and the ground surface may be determined. For example, the ground level, or the distance between the surveying instrument and the ground surface, may be calculated by, e.g., averaging, interpolating, or smoothing the plurality of distance measurements.

By performing a rotation of the center unit about the first axis such that the front lens and/or the optical axis of the center unit may sweep across the predetermined rotational position, the EDM unit may be used to obtain a surface profile of an object. For example, if the surveying instrument is to be positioned above a raised mark provided on the ground surface, a surface profile of the mark and the surrounding ground surface may be provided. In this way, the surveying instrument may be correctly positioned above a mark protruding from the ground surface, and a distance between the surveying instrument and the ground surface may be efficiently and accurately determined based on the surface profile.

According to some embodiments, the surveying instrument may further comprise a processor in communicative contact with the EDM unit. The processor may be configured to determine a height of the surveying instrument above a surface below the surveying instrument based on an input received from the EDM unit with the center unit being in the predetermined rotational position.

The processor may be configured to receive/send data from/to components of the surveying instrument, external devices and/or remotely located devices. The processor may be configured to process, perform calculations based on, and/or store the data. The processor may be connected, by cable or wirelessly, to the EDM unit. The processor may be configured to receive data from the EDM unit.

In an example, the surveying instrument may be arranged above a surface, e.g., a ground surface. The EDM unit may perform one or more distance measurements with the center unit being in the predetermined rotational position. The processor may receive data (input) related to the one or more distance measurements from the EDM unit. The processor may calculate or determine a height of the surveying instrument above (a mark on) the ground surface based on the data. The processing unit may store the data related to the one or more distance measurements received from the EDM unit, and determine the height based on that stored data at a later stage.

The surveying instrument may therefore determine a height of the surveying instrument above a ground surface, and/or a ground mark. In this way, positioning of the surveying instrument as well as height measurement of the surveying instrument may be made possible using an EDM unit arranged in the center unit. By utilizing the EDM unit comprised in the center unit, the surveying instrument according to the present disclosure may be used for measurements related to surveying, positioning of the surveying instrument, and height measurements of the surveying instrument above a surface. Thereby, the surveying instrument according to the present disclosure may remove the need for additional or external hardware for positioning and/or height measurement, such as a separate EDM unit or a measurement tape.

The surveying instrument according to the present disclosure may provide a more compact instrument with fewer components. The surveying instrument may further provide a facilitated, more accurate and more automated positioning of the surveying instrument and height measurement of the surveying instrument above a surface, in comparison with, e.g., using a measurement tape

According to some embodiments, the optical device may comprise an imaging unit. The surveying instrument may further comprise a display configured to display an image captured by the imaging unit.

The imaging unit may be arranged in the center unit. The imaging unit may be configured to capture or generate an image based on light received along the optical axis of the center unit. The imaging unit may be an image sensor and/or a camera.

The display may be arranged on the surveying instrument or remotely to the surveying instrument. The display may be configured to display, show, or present information to a user of the surveying instrument. The display may be connected, by cable or wirelessly, to the imaging unit, and/or to one or more other components of the surveying instrument, such as the processing unit.

In an example, the imaging unit may capture an image of a target placed at a distance from the surveying instrument during surveying measurements, i.e., when line of sight of the center unit is directed towards a target. The captured image may be shown to a user of the surveying instrument via the display. In the predetermined rotational position of the center unit, the imaging unit may capture an image of a ground surface below the surveying instrument via the optical path. The captured image may be used for positioning of the surveying instrument, for example above a mark provided on the ground surface. The display or the image may include a crosshair or other marking to indicate a position of the optical axis in the image. Thus, when the center unit is in the predetermined rotational position, the marking may indicate a position of the second axis in the image. The captured image may indicate a relation between the second axis of the surveying instrument and the mark. By this, positioning of the surveying instrument in relation to the mark may be facilitated. For example, the second axis and the mark may align or overlap in the captured image for correct positioning. The imaging unit may thereby act as a camera plummet.

The imaging unit may be used during surveying as well as during positioning of the surveying instrument. The imaging unit may act as a camera plummet for identifying a position of the second axis intersecting the ground surface. By using the imaging unit of the center unit as a camera plummet, there is no need for an additional and/or separate camera plummet arranged on the surveying instrument. This further provides a more compact instrument.

According to some embodiments, the optical device may comprise an imaging unit. The surveying instrument may comprise a processor in communicative contact with the imaging unit. The processor may be configured to determine a horizontal position of the surveying instrument in relation to a mark on a surface below the surveying instrument based on an input received from the imaging unit with the center unit being in the predetermined rotational position.

The imaging unit and the processor may be equivalent to the imaging unit and the processor described above in relation to preceding embodiments. The processor may be configured to receive data (input) from the imaging unit, e.g., wirelessly or via cable.

In an example, the imaging unit may capture or generate an image of a ground surface below the surveying instrument, via the optical axis and the optical path, with the center unit being in the predetermined rotational position. The image may comprise a mark on the ground surface and/or the surrounding ground surface. The processing unit may receive data from the imaging unit relating to or comprising the generated image. Based on the data, the processing unit may determine or calculate a horizonal position of the surveying instrument in relation to the mark. For example, in embodiments comprising a display, the horizontal position in relation to the mark may be displayed on the display. The determined horizontal position may facilitate correct positioning of the surveying instrument.

In an example, the imaging unit may comprise a crosshair representing the optical axis of the surveying instrument. Alternatively, a crosshair representing the optical axis may be added or inserted to an image captured by the imaging unit, e.g., by the processing unit. In an example, the display displaying an image captured by the imaging unit may comprise and/or add a crosshair representing the second axis. The processing unit may identify a ground mark, and/or a crosshair, in the captured image. The ground mark in the captured image may be identified based on an input from a user of the surveying instrument, e.g., via the display in embodiments comprising a display. Alternatively, the ground mark may be identified using computer vision or image processing methods. The processing unit may determine a horizontal position of the surveying instrument in relation to the mark based on a distance between the crosshair and the identified mark. The surveying instrument according to the present disclosure may provide a facilitated determination of a horizontal position of the surveying instrument, and thereby a facilitated positioning of the surveying instrument.

According to some embodiments, the center unit may further comprise a visual channel configured to transmit light entering the front lens along the optical axis to an eyepiece.

Light that enters the front lens may be transmitted, guided and/or directed in a visual channel of the center unit to the eyepiece. The eyepiece may be arranged on the surveying instrument. The eyepiece may allow a user of the surveying instrument to see, look or view along the optical axis of the center unit. In an example, during surveying measurements, a user may view a target via the eyepiece as the optical axis of the center unit is directed towards the target.

When the center unit is in the predetermined rotational position, a user may see, via the optical path, along the second axis of the surveying instrument. Thus if, the surveying instrument is arranged above a surface, the surface may be seen via the eyepiece if the center unit is in the predetermined rotational position. The eyepiece may comprise a crosshair indicating the optical axis, i.e., the line of sight, or the surveying instrument. With the center unit being in the predetermined rotational position, the optical axis aligns with the second axis. The crosshair may thus indicate the second axis. A user may thereby see the location of the second axis relative to the surface when looking through the eyepiece. The eyepiece and the visual channel may be used for positioning of the surveying instrument.

The eyepiece and the visual channel may act as an optical plummet for positioning of the surveying instrument.

According to some embodiments, the optical arrangement may comprise at least two reflective surfaces arranged to direct the optical path from the first side of the alidade to the aperture.

The at least two reflective surfaces may be mirrors, prisms, and/or any other optical components configured to at least partly reflect light. The at least two reflective surfaces may "fold" the optical path formed by the optical arrangement. The at least two reflective surfaces may direct, guide and/or reflect light in the alidade. In the predetermined rotational position of the center unit, light emitted from and/or received to the optical device in the center unit may be reflected and/or directed by the at least two reflective surfaces in the alidade from the first side of the alidade to the aperture at the second side of the alidade, and/or from the aperture at the second side of the alidade to the first side of the alidade.

By having at least two reflective surfaces comprised in the optical arrangement, the optical path may be "folded", for example such that the optical path bypasses the tilt sensor in the alidade. The at least two reflective surfaces may provide a way to bypass and/or direct the light around or besides of any kind of obstacle being placed at or along the second axis.

According to some embodiments, the optical arrangement may comprise a beam expander arranged to reduce a width of the optical path from the first side of the alidade to the aperture.

The beam expander may be referred to as an inverted beam expander, a reverse beam expander and/or a beam reducer. The beam expander may comprise one or more optical components such as lenses, prisms, windows, mirrors, and/or optical flats. The beam expander may reduce the width (or the diameter) of the optical path from the first side of the alidade to the aperture at the second side of the alidade. The beam expander may expand the width (or the diameter) of the optical path from the aperture to the first side of the alidade. The beam expander in the optical arrangement may reduce the beam diameter of light entering the first side of the alidade and exiting at the aperture at the second side of the alidade.

The aperture may have a limited size or diameter. Light emitted at the front lens of the center unit may have a larger diameter than the aperture in the alidade since the center unit may be used for surveying measurements. In surveying, a small beam diameter (spot size) at a distant target may be advantageous for precise measurements. However, due to the diffraction limit of light, the spot size may be inversely related to the beam diameter at the front lens. For example, a large beam diameter, e.g., larger than 30 mm, at the front lens may be focused to a small spot size, e.g., less than < 3 mm at longer distances, e.g., 100 m. A large beam diameter at the front lens may therefore be desirable. The beam expander may provide that a large amount, or the total amount, of the light beam exiting form the front lens, may be transmitted through the optical arrangement and the aperture in the alidade. Thereby, a loss of light from the front lens may be reduced. Furthermore, the beam expander may provide that reflections of light entering the aperture of the alidade may be transmitted through the optical arrangement and the front lens of the center unit. Thereby, a magnified image of a surface below the surveying instrument may be provided by the camera and/or the eyepiece. This may further improve the positioning of the surveying instrument and/or the measurements along the second axis.

According to some embodiments, the front lens may have an optical diameter in the range 25-55 mm.

The optical diameter of the front lens may be different depending on application of the surveying instrument. The spot size of the light beam, e.g., the laser beam, at a target located at a distance from the surveying instrument may be inversely related to the optical diameter of the front lens. To achieve a small spot size at a target, a large optical diameter of the front lens may be desired. Therefore, by having an optical diameter of the front lens in the range of 25-55 mm, a desirable spot size at a target may be provided. This may in turn provide more accurate and precise measurements during surveying.

According to some embodiments, the center unit may further comprise an adjustable focus lens configured to adjust a focus of the optical device.

The adjustable focus lens may for example be movably arranged along the optical path. Thus, a focus of the optical device may be adjusted by adjusting a position of the adjustable lens along the optical path. The surveying instrument may for example comprise a control unit, an actuator or the like, configured to move the focus lens. Alternatively, the adjustable lens may be a liquid lens, with an adjustable focus. Furthermore, in some embodiments, the focus lens may be static while the optical device is movable relative to the focus lens, to adjust a focus of the optical device.

The focus lens may be arranged in the center unit. The focus lens may be arranged along the optical axis of the center unit. The focus lens may be arranged along the optical axis of the optical device. For example, if the optical device comprises an EDM unit, the focus lens may be arranged along the optical axis of the EDM unit such that its laser beam may be focused. The focus lens may be configured to move along the optical axis of the center unit and/or along the optical axis of the optical device such that the focus of the optical device may be adjusted.

The focus lens may focus light emitted from and/or received by the optical device depending on a distance to a target to be measured by the surveying instrument. By this, the focus of the optical device may be adjusted for surveying measurements as well as during positioning and/or measurements along the second axis of the surveying instrument. Distances measured during surveying measurements and distances measured during, e.g., height measurements differ in magnitude. For example, in surveying operations, distances of up to several hundred meters may be measured. In height measurements, the distance may for example be in a range from 0.5 to 2 meters. However, larger heights, such as 10m, 20m or more, may also be measured, if the surveying instrument were to be arranged at such a height. The focus lens may allow to switch between distant focus and nearby focus. The focus lens may further improve the positioning and height measurement of the surveying instrument, as light emitted or received by the optical device may better be focused at, e.g., a ground surface or a ground mark. The focus lens may provide a more efficient and accurate positioning of the surveying instrument.

In an example, the height of the surveying instrument above a ground surface may be measured, e.g., using the EDM unit. The height may be relayed to a control unit having a focusing function configured to move the focus lens, such that the focus lens may be moved to a correct position along the optical axis. Furthermore, a focus of the imaging unit, an eyepiece, a laser plummet and/or an EDM may be adjusted based on the measured height.

According to some embodiments, the tilt sensor may be a liquid-based tilt sensor.

The tilt sensor may comprise and/or use a liquid to determine a tilt or inclination of the surveying instrument. In an example, the tilt sensor may further comprise a light-emitting diode (LED) and an imaging sensor. A light beam from the LED may be emitted in a liquid, such as oil, and reflected by a surface of the liquid back to the imaging sensor. Based on the reflected light beam, the inclination of the surveying instrument relative to gravity may be measured.

When the surveying instrument is positioned, it may take some time for the liquid in a liquid-based tilt sensor to settle. This is referred to as the settling time of the sensor. By arranging the liquid-based tilt sensor along the second axis (the vertical central axis) of the surveying instrument, the settling time for the sensor may be reduced.

According to some embodiments, the alidade may be configured to be attached to a support structure for arranging the surveying instrument above a surface.

The support structure may be configured to attach, connect, or mount to the alidade. The support structure may arrange, place, or position the surveying instrument above a surface, e.g., a ground surface. By this, the surveying instrument may be arranged at a height above the surface. For example, the support structure may comprise a stand and/or a tripod.

According to some embodiments, the support structure may comprise a tribrach including a through-hole. The alidade may be configured to be attached to the tribrach such that the aperture aligns with the through-hole.

The tribrach may be configured to attach, connect and/or mount the surveying instrument and/or the alidade to the support structure. For example, the tribrach may attach the alidade to a tripod. The tribrach may comprise a through-hole and/or an opening. The aperture at the second side of the alidade may be aligned with the through-hole of the tribrach if the alidade is attached to the tribrach. By this, light entering and/or exiting the aperture of the alidade may be guided through the tribrach. The diameter of the through-hole of the tribrach may be limited, for example, depending on production or other requirements and/or conditions. The tribrach may allow for precise adjustment of the horizontal position of the surveying instrument without moving, e.g., a tripod or other arrangement on which the tribrach and surveying instrument are arranged. The tribrach may be configured to adjust, change and/or set the horizontal position of the surveying instrument.

It is noted that other embodiments using all possible combinations of features recited in the above-described embodiments may be envisaged. Thus, the present disclosure also relates to all possible combinations of features mentioned herein.

### Brief description of drawings

Exemplifying embodiments will now be described in more detail, with reference to the following appended drawings:
Figure 1 illustrates a cross-section of a surveying instrument according to the present disclosure;
Figure 2 illustrates a cross-section of a surveying instrument according to some embodiments of the present disclosure;
Figure 3A illustrates a cross-section of a surveying instrument according to some embodiments of the present disclosure;
Figure 3B illustrates an example distance measurement performed by the surveying instrument according to some embodiments of the present disclosure;
Figure 4 illustrates a surveying instrument according to some embodiments of the present disclosure.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

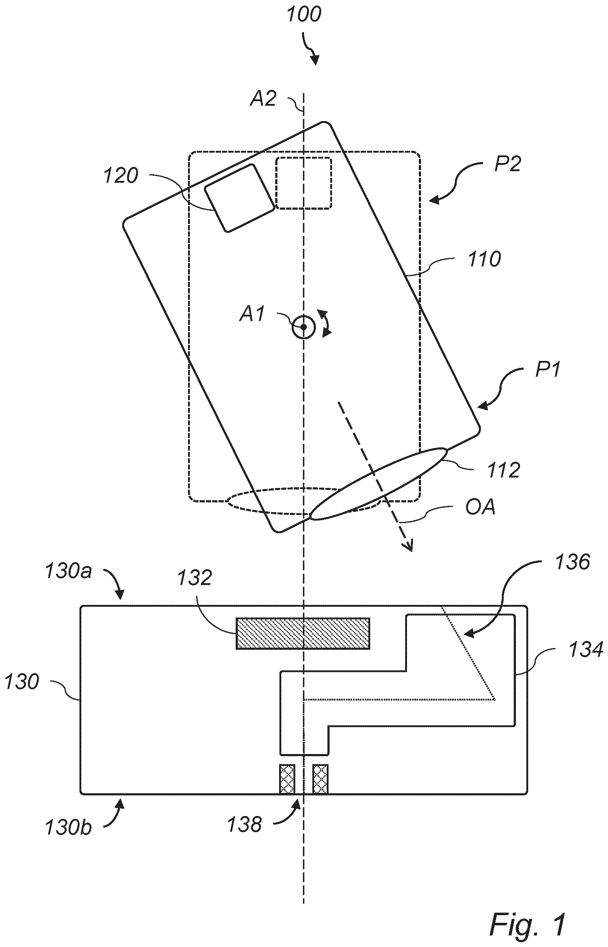

In Fig. 1, a cross-sectional view of a surveying instrument 100 according to the present disclosure is illustrated. The surveying instrument 100 comprises a center unit 110 comprising an optical device 120 and a front lens 112. As seen in Fig. 1, the optical device 120 and the front lens 112 are arranged within a housing of the center unit 110. The optical device 120 is arranged to emit and/or receive light through the front lens 112, along an optical axis OA of the center unit 110. The optical axis OA of the center unit 110 is illustrated with a dashed arrow in Fig. 1. The optical device 120 may be a device configured to emit light such as a light source, and/or a device configured to receive light such as a light sensitive sensor or detector. The optical device 120 may be suitable for surveying measurements and/or distance measurements, e.g., towards a distant target.

The front lens 112 may be an optical element configured to collimate or focus the light emitted from and/or received by the optical device 120. The properties of the front lens 112, such as the optical diameter of the front lens 112, may be suitable for surveying measurements and/or distance measurements. Due to the diffraction limit of light, the spot size (beam diameter) at a distant target may be inversely related to the beam diameter at the front lens 112. A large beam diameter at the front lens 112 may therefore be desirable to obtain a small spot size at a target and precise measurements. For example, the front lens 112 may have an optical diameter in the range 25-55 mm.

The surveying instrument 100 further comprises an alidade 130. The center unit 110 is rotatably arranged or mounted on the alidade 130 about a first axis A1 of the surveying instrument 100. The center unit 110 is therefore rotatable about the first axis A1 as illustrated with a double arrow in Fig. 1. In Fig. 1, the first axis A1 is perpendicular to the image plane, and thereby illustrated as a circle with a dot. The first axis A1 is orthogonal to the optical axis OA of the center unit 110. The alidade 130 comprises a tilt sensor 132 arranged along a second axis A2 of the surveying instrument 100. The second axis A2 is illustrated with a dashed line in Fig. 1. The second axis A2 is orthogonal to the first axis A1. The tilt sensor 132 is configured to measure or determine an angle or an inclination of the second axis A2 relative to the vertical line of gravity. The tilt sensor 132 may be used to level the surveying instrument 100. Arranging the tilt sensor 132 along the second axis A2 may improve the functionality of the tilt sensor 132. The tilt sensor 132 may be a liquid-based tilt sensor.

The alidade 130 further comprises an optical arrangement 134. As seen in Fig. 1, the tilt sensor 132 and the optical arrangement 134 are arranged in a housing of the alidade 130. The optical arrangement 134 is arranged to form an optical path 136 from a first side 130a of the alidade 130 to an aperture 138 arranged along the second axis A2 at a second side 130b of the alidade 130. The optical arrangement 134 may comprise one or more optical elements such as lenses, reflective surfaces, mirrors, windows, optical flats, and/or prisms, and allows for guidance of light through the alidade 130. The optical path 136 is illustrated with a dotted line in Fig. 1. The optical path 136 created or formed by the optical arrangement 134 bypasses the tilt sensor 132 as shown in Fig. 1. The aperture 138 provided at the second side 130b of the alidade is illustrated in the bottom of the alidade 130 in Fig. 1. In the setup of the surveying instrument 100 for performing surveying measurements, the second side 130b of the alidade, and thereby the aperture 138, is often facing a surface above which the surveying instrument 100 is arranged.

In Fig. 1, an example rotational position P2 of the center unit 110 about the first axis A1 is illustrated with the center unit in dashed lines. In the example rotational position P2 of the center unit 110 about the first axis A1, the optical axis OA of the center unit 110 is aligned with the second axis A2 and the front lens 112 faces the tilt sensor 132. In the example rotational position P2, the tilt sensor 132 would block any free light path along the second axis A2. Thus, the position of the tilt sensor 132 prevents the center unit 110 to emit or receive light through the alidade 130 along the second axis A2.

In Fig. 1, a predetermined rotational position P1 of the center unit 110 about the first axis A1 is illustrated with the center unit in solid lines. In the predetermined rotational position P1 of the center unit 110 about the first axis A1, the optical axis OA aligns with the optical path 136 formed by the optical arrangement 134 in the alidade 130. In the predetermined rotational position P1, the optical device 120 is arranged to emit and/or receive light via the optical path 136 and through the aperture 138 along the second axis A2. With the center unit 110 being in the predetermined rotational position P1, light emitted by the optical device 120 along the optical axis OA, is guided by optical path 136 and exits at the aperture 138 of the alidade along the second axis A2. Likewise, the predetermined rotational position P1 allows for light to enter the aperture 138 along the second axis A2, to be guided via the optical path 136 and along the optical axis OA of the center unit 110 to be received by the optical device 120.

In an example, the center unit 110 may be rotated to the predetermined rotational position P1 manually, e.g., by a user of the surveying instrument 100, or automatically, e.g., by a control unit (not shown) comprised in the surveying instrument 100. The predetermined rotational position P1 may correspond to, or be defined by, an angle of the center unit 110 and/or the optical axis OA relative to the second axis A2.

The optical device 120 comprised in the center unit 110 may be used to position the surveying instrument 100, e.g., above a surface (not shown). During a positioning operation (or procedure), the center unit 110 may be rotated to the predetermined rotational position P1. By this, the optical device 120 may, for example, emit light towards the surface via the optical path 136. The light may be projected on the surface and used to position the surveying instrument 100, e.g., relative a reference point on the surface. In this way, surveying measurements, for example towards a target (not shown), may be performed with the surveying instrument 100 positioned relative a reference point on the surface. The optical device 120 may, for example, receive light from the surface via the optical path 136. The light received by the optical device 120 may be processed such that it may be used to position the surveying instrument 100 relative the reference point provided on the surface.

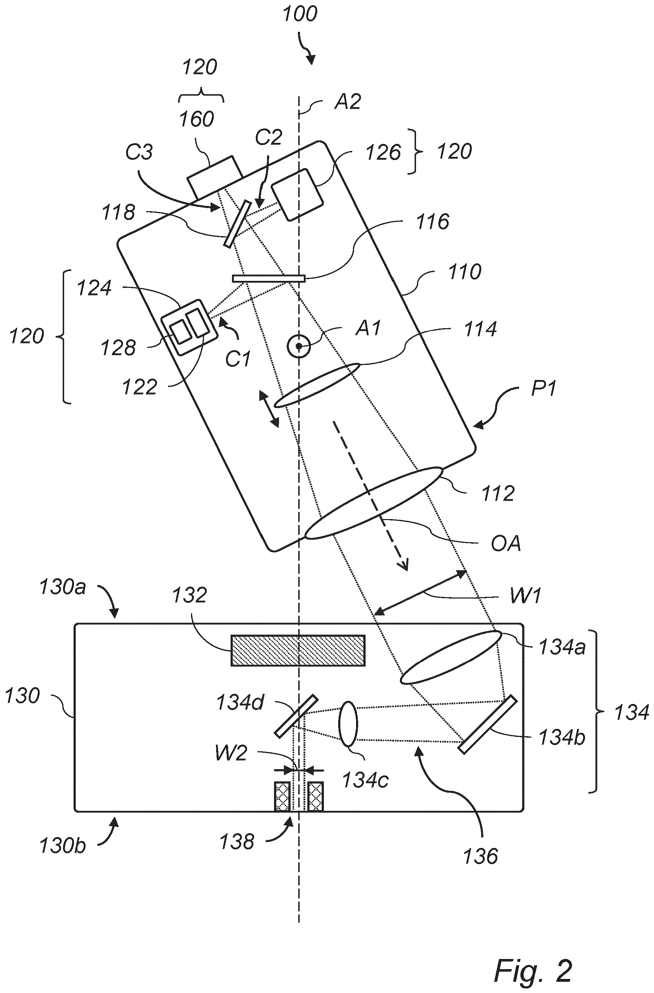

In Fig. 2, a cross-sectional view of a surveying instrument 100 according to some embodiments of the present disclosure is shown. It should be noted that the surveying instrument 100 illustrated in Fig. 2 has several features in common with the surveying instrument 100 shown in Fig. 1. Further reference is therefore made to Fig. 1 and the associated text for an increased understanding of these features of the surveying instrument 100.

In Fig. 2, the center unit 110 is positioned in the predetermined rotational position P1. In Fig. 2, the optical device 120 comprises a laser source 122 forming part of an electronic distance measurement, EDM, unit 124. The laser source 122 is configured to emit a laser beam. In Fig. 2, the EDM unit 124 comprises a detector 128 configured to detect reflected light of a laser beam emitted by the laser source 122. Specifically, the detector is configured to detect light received through the front lens 112, along the optical axis OA, corresponding to a laser beam emitted by the laser source 122, through the front lens 112, along the optical axis OA, and reflected by an object in a surrounding of the surveying instrument, back towards the surveying instrument 100. The EDM unit 124 is configured to measure a distance between the surveying instrument 100 and an object based on the laser beam emitted by the laser source 122 and/or the received reflected light. The illustration of the EDM unit 124 in Fig. 2 is schematic, and the arrangement of the laser source 122 and the detector 128 may vary from what is seen in Fig. 2.

As illustrated in Fig. 2, the EDM unit 124 emits and receives light in (or along) a first optical channel C1. Thereby, the laser source 122 emits a laser beam into the first optical channel C1 and the detector 128 receives or detects light through the first optical channel C1. The center unit 110 comprises a first beam splitter 116 configured to direct light from and to the EDM unit 124. A laser beam emitted from the EDM unit 124 through the first optical channel C1 may be directed and/or reflected by the first beam splitter 116 such that the laser beam is aligned with the optical axis OA and emitted through the front lens 112. Furthermore, light that enters through the front lens 112 along the optical axis OA may be directed and/or reflected by the first beam splitter 116 to reach the detector 128 of the EDM unit 124 via the first optical channel C1.

The optical device 120 in Fig. 2 further comprises an imaging unit 126. The imaging unit 126 may comprise an image sensor or a camera. As shown in Fig. 2, the imaging unit 126 receives light through a second optical channel C2. The imaging unit 126 is configured to capture an image via the second optical channel C2 and along the optical axis OA. The center unit 110 comprises a second beam splitter 118 configured to direct light to the imaging unit 126. Light that enters through the front lens 112 along the optical axis OA may be transmitted through the first beam splitter 116 and directed and/or reflected by the second beam splitter 118 to reach the imaging unit 126 via the second optical channel C2. The first beam splitter 116 and the second beam splitter 118 may provide one or more optical channels associated with one or more optical devices 120. As seen in Fig. 2, the first beam splitter 116 and the second beam splitter 118 are arranged to align the first optical channel C1, the second optical channel C2 and a visual channel C3 along the optical axis OA. In this way, the EDM unit 124, the imaging unit 126 and an eyepiece 160 may emit and/or receive light through the front lens 112 along the optical axis OA. The first beam splitter 116 and/or the second beam splitter 118 may be a prism, a beam splitter plate, or a flat optic. The first and/or second beam splitter may, e.g., each include a dichroic beam splitter, a beam splitter using a patterned or partly reflective coating, or a polarization-based beam splitter.

The surveying instrument 100 in Fig. 2 comprises an eyepiece 160. As seen in Fig. 2, the eyepiece is attached to the center unit 110 at the opposite side of the front lens 112, however, the eyepiece 160 may be arranged differently on the center unit 110 and/or elsewhere on the surveying instrument 100. In Fig. 2, the center unit 110 comprises a visual channel C3 configured to transmit light that enters the front lens 112 along the optical axis OA to the eyepiece 160. Light that enters the front lens 112 along the optical axis OA may be transmitted through the first beam splitter 116 and through the second beam splitter 118 to reach the eyepiece 160 via the visual channel C3. The eyepiece 160 and the visual channel C3 allow a user of the surveying instrument 100 to see through the center unit 110 along the optical axis OA towards an object and/or a surface towards which the center unit 110 is aimed.

As illustrated in Fig. 2, the center unit 110 comprises a moveable focus lens 114. The focus lens 114 is configured to adjust a focus of the optical devices 120, that is, the EDM unit 124, including the laser source 122 and the detector 128, the imaging unit 126, and the eyepiece 160, in Fig. 2. The focus lens 114 is arranged along the optical axis OA and configured to move along the optical axis OA as illustrated by the double arrow in Fig. 2. The focus lens 114 may be moved along the optical axis OA to focus light emitted from and/or received by the EDM unit 124, the imaging unit 126 and/or the eyepiece 160. By this, the focus of the optical devices 120 may be adjusted for surveying measurements as well as during positioning and/or measurements along the second axis A2 of the surveying instrument 100. Thus, the moveable focus lens 114 allows to switch between distant focus and nearby focus.

Furthermore, as shown in Fig. 2, the alidade 130 comprises an optical arrangement 134 comprising four different optical elements. The optical arrangement 134 comprises a first lens 134a, a first reflective surface 134b, a second lens 134c and a second reflective surface 134d. The first reflective surface 134b and the second reflective surface 134d are arranged to direct the optical path 136 from the first side 130a of the alidade 130 to the aperture 138 at the second side 130b of the alidade 130. The first reflective surface 134b and the second reflective surface 134d are arranged to guide light in the alidade such that it bypasses, or circumvents, the tilt sensor 132. As seen in Fig. 2, the optical path 136 is "folded" twice such that light bypasses the tilt sensor 132 and exits through the aperture 138. The first lens 134a and the second lens 134c form part of a beam expander. The optical path 136 is illustrated with two dotted lines in Fig. 2. The dotted lines may correspond to edges or borders of the optical path 136. As shown in Fig. 2, the optical path 136 has a first width W1 at the first side 130a of the alidade 130 and a second width W2 at the second side 130b of the alidade 130. In Fig. 2 the first lens 134a and the second lens 134c (the beam expander) reduce the width of the optical path 136 from the first side 130a of the alidade (the first width W1) to the aperture 138 at the second side 130b of the alidade 130 (the second width W2). In Fig. 2, the first lens 134a and the second lens 134c (the beam expander) expand the width of the optical path 136 from the aperture 138 at the second side 130b of the alidade 130 (the second width W2) to the first side 130a of the alidade (the first width W1).

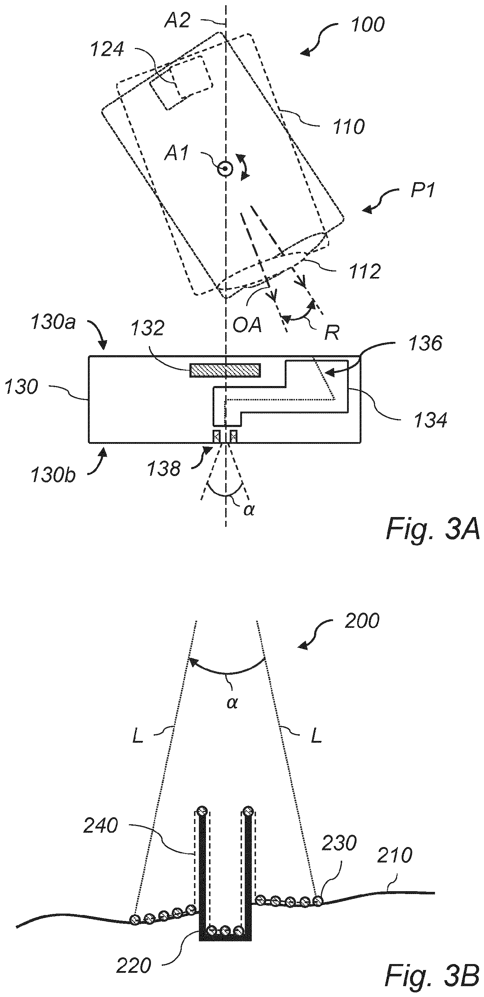

With reference to Figs. 3A and 3B, an example operation of a surveying instrument 100, in accordance with some embodiments, will be described.

In Fig. 3A, a cross-sectional illustration of a surveying instrument 100 according to some embodiments of the present disclosure is shown. It should be noted that the surveying instrument 100 illustrated in Fig. 3A has several features in common with the surveying instrument 100 shown in Figs. 1-2. Further reference is therefore made to Figs. 1-2 and the associated text for an increased understanding of these features of the surveying instrument 100.

Figure 3B illustrates a ground mark in the form of a pipe 220 protruding from the ground 210, in relation to which the surveying instrument 100 may be positioned.

Fig. 3A illustrates the center unit 110 performing a rotation R about the first axis A1 across the predetermined rotational position P1. In other words, the center unit 110 performs a rotation about the first axis A1 that begins at a first side of the predetermined rotational position P1, e.g., at an angle relative to the second axis A2 that is smaller/larger than an angle defining the predetermined rotational position P1. The center unit 110 rotates about the first axis A1 to a second side of the predetermined rotational position P1, e.g., to an angle relative to the second axis A2 that is larger/smaller than an angle defining the predetermined rotational position P1. In Fig. 3A, the center unit 110 is illustrated in two different positions with dashed lines to illustrate the rotation R about the first axis A1 across the predetermined rotational position P1. The rotation R of the center unit 110 across the predetermined rotational position P1 may cause the optical axis OA to move across (pass by) an opening of the optical path 136 at the first side 130a of the alidade 130.

The center unit 110 in Fig. 3A comprises an EDM unit 124. The laser source (not shown) of the EDM unit 124 may emit a laser beam along the optical axis OA during the rotation R of the center unit 110. The emitted laser beam may enter the optical path 136 at an angle that varies during the rotation. The angle at which the laser beam enters the optical path 136 may affect an angle at which the laser beam exits the aperture 138. Thus, during the rotation R, the emitted laser beam may be transmitted through the optical path 136, such that the laser beam is emitted through the aperture 138 of the alidade 130 in an angular range a across (or including) the second axis A2. The laser beam may thereby exit the aperture 138 as a sweep, or move, in the angular range a across the second axis A2. In Fig. 3B, the laser beam L is illustrated with dotted lines and the angular range α is illustrated with an arrow sweeping from the right to the left in Fig. 3B.

As is illustrated in Fig 3B, the surveying instrument 100 may be positioned in relation to a pipe 220 protruding from the ground surface 210. It may be difficult to determine a ground level in relation to the pipe 220 extending from the ground surface 210 based on a single measurement. The ground level may for example be lower or higher inside the pipe than outside of the pipe.

The rotation of the center unit 100 about the first axis A1 across the predetermined rotational position P1 causes the laser beam L to move in an angular range α across the second axis A2, which in the example measurement 200 in Fig. 3B is illustrated by the laser beam L going from the right to the left. The laser beam L thereby sweeps across a part of the ground surface 210 and the pipe 220.

The laser beam L may comprise a continuous laser beam or a plurality of laser pulses. The detector (not shown) of the EDM unit 124 may receive light, e.g., reflected light, from the angular range α during the rotation R of the center unit 110 via the aperture 138, the optical path 136 and along the optical axis OA. The EDM unit 124 may be configured to perform a plurality of distance measurements during the rotation R of the center unit 110, based on the emitted laser beam and the received reflected light.

In Figure 3B, the EDM unit 124 performs a plurality of distance measurements 230 (or a "scan") illustrated as patterned dots or points. Based on the plurality of distance measurements 230, a surface profile 240, illustrated by a dashed line in Fig. 3B, of the ground surface 210 and the protruding pipe 220 may be generated. In an example, a processing unit (not shown) of the surveying instrument may receive data from the EDM unit comprising the plurality of distance measurements 230. The processing unit may generate or determine a surface profile 240 based on the plurality of distance measurements 230. The surface profile 240 may correspond to a height profile including the protruding pipe 220 and the surrounding ground surface 210. The surface profile 240 may be used to identify and/or determine a distance between the surveying instrument and the ground surface 210, e.g., to determine the height of the surveying instrument above the ground. For example, the distance between the surveying instrument and the ground surface 210 may be calculated by, e.g., averaging the surface profile 240, interpolation of the distance measurements, or other known methods.

The surface profile 240 may provide surface topography information along one dimension, i.e., height measurements along a line. However, in some situations it may be preferable to collect topography information along more than one dimension, e.g., to generate a three-dimensional height map of an area of the ground surface .

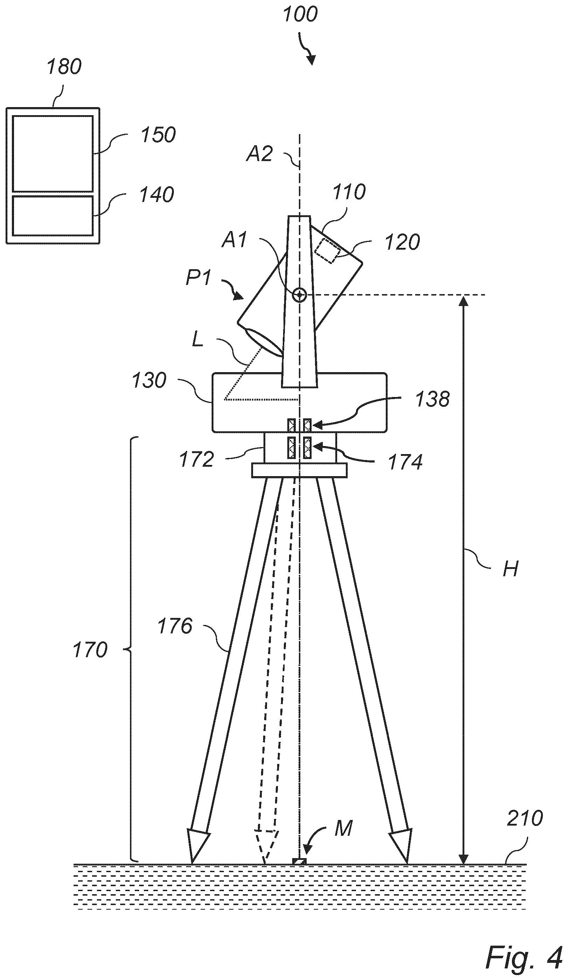

In an example, the center unit 110 may be held by or connected to the alidade 130, for example as shown in Fig 4. The alidade 130 may be configured to rotate about the second axis A2. Thus, the center unit 110, held by the alidade 130, may rotate about the second axis A2 together with the alidade 130. By rotating the alidade 130 about the second axis A2, height measurements may be made at different rotational positions of the alidade 130 and center unit 110 about the second axis A2. Thus, measurements may be made at different positions across two dimensions of an area of the ground surface 210 below the surveying instrument 100 when generating a surface profile 240.

In an example, the alidade 130 may first be positioned at a first rotational position about the second axis A2. The center unit 110 may perform a first rotation R about the first axis A1 across the predetermined rotational position P1, as illustrated in Fig. 3A, to generate a first surface profile 240. The alidade 130 may then be rotated about the second axis A2 to a second rotational position. At the second rotational position of the alidade 130 about the second axis A2, the center unit 110 may perform a second rotation R about the first axis A1 across the predetermined rotational position P1, to generate a second surface profile 240. The first and second surface profiles may be combined to generate a combined surface profile. To increase a density of measurements, and thereby improve the combined surface profile, surface topography measurements (or height measurements), as described above with reference to Figure 3A and 3B, may be performed for a plurality of rotational positions of the alidade 130 about the second axis A2.

In an example, the center unit 110 may be positioned at one or more rotational positions about the first axis A1 near the predetermined rotational position P1, e.g., at one or more angles relative to the second axis A2 that are smaller/larger than an angle defining the predetermined rotational position P1. At each of the one or more predetermined positions of the center unit 110 about the first axis A1, the alidade 130 may perform a rotation about the second axis A2 while the EDM unit 124 may perform a plurality of distance measurements 230. In this way, one or more circular, or arc surface profiles may be generated.

Based on a plurality of generated surface profiles, a three dimensional height map of at least a portion of the surface 210 below the surveying instrument 100 may be generated.

In Fig. 4, a side view illustration of a surveying instrument 100 according to some embodiments of the present disclosure is shown. It should be noted that the surveying instrument 100 illustrated in Fig. 4 has several features in common with the surveying instrument 100 shown in preceding Figures. Further reference is therefore made to the preceding Figures and the associated text for an increased understanding of these features of the surveying instrument 100.

In Fig. 4, the surveying instrument 100 is arranged above a ground surface 210 and attached to a support structure 170. The support structure comprises a tripod 176 and a tribrach 172, each comprising a through-hole 174. As seen in Fig. 4, the tripod comprises three legs arranged or placed on the ground surface 210. The tribrach 172 is attached to the tripod 176 and the alidade 130 is attached to the tribrach 172. The alidade 130 may be rotatably attached to the tribrach 172 about the second axis A2 such that the alidade 130, holding the center unit 110, may be rotated about the second axis A2. The tribrach 172 may be configured to allow precise adjustment of the horizontal position of the surveying instrument 100 without moving the tripod 176. For example, the tribrach 172 may allow for precise horizontal adjustments or displacements of the alidade 130 such that the surveying instrument 100 is correctly positioned horizontally, e.g., with reference to a point on the ground. The aperture 138 of the alidade 130 and the through-hole 174 of the tribrach align as illustrated in Fig. 4.

In Fig. 4, the center unit 110 is in the predetermined rotational position P1 about the first axis A1 and comprises the optical device 120. In an example, the optical device 120 may comprise a laser source configured to emit a laser beam L illustrated with a dotted line. The laser beam L exits the center unit 110, is guided through the alidade 130 along the optical path (not shown) to the aperture 138 of the alidade 130, and through the through-hole 174 of the tribrach 174 along the second axis A2. The laser beam L may be projected on the ground surface 210 as a laser dot. In this way, the laser source, such as a laser source of an EDM unit, may act as a laser plummet indicating the location of the second axis A2 of the surveying instrument 100 on the ground surface 210. A user of the surveying instrument 100 may position the surveying instrument 100 based on the projected laser dot, e.g., in relation to a ground mark M, as seen in Fig. 4. For example, if the laser dot is located beside (next to) the ground mark M, the user may adjust the horizontal position of the surveying instrument 100 such that the laser beam L and the ground mark M align, i.e., such that the laser dot is positioned on the ground mark M. The user may adjust the horizontal position by moving the surveying instrument 100, e.g., by moving the tripod 176, and/or by translating the tribrach 172 relative to the tripod 176. If the surveying instrument 100 is levelled, the second axis, or vertical central axis, of the surveying instrument 100 may be aligned with a vertical axis, or a vertical line of gravity. Thus, for a levelled surveying instrument 100, with its center unit 110 in its predetermined rotational position P1, the laser beam L may act as a laser plummet to indicate a nadir, or a point directly below the surveying instrument 100.

In Fig. 4, light from the emitted laser beam L may be reflected, e.g., by the ground mark M. At least a part of the reflected light may enter the through-hole 174 of the tribrach 172 and the aperture 138 of the alidade 130. The light may be guided along the optical path to the front lens of the center unit 110 to reach a detector of the EDM unit in the center unit 110. The EDM unit comprised in the optical device 120 may measure a distance between the surveying instrument 100 and the ground surface 210, or the mark M, based on the emitted laser beam L and the detected reflected light. As illustrated in Fig. 4, the surveying instrument 100 comprises a processor 140 in communicative contact with the optical device 120, and thereby the EDM unit. Based on data (or input) from the EDM unit, such as data indicating the measured distance, the processor 140 is configured to determine a height H of the surveying instrument 100 above the ground surface 210. Thus, the height H of the surveying instrument 100 may be determined using the EDM unit in the center unit 110.

In Fig. 4, the processor 140 is comprised in an external device 180. The external device 180 may be a portable device, such as a tablet or a mobile device. The external device 180 may be used by a user of the surveying instrument 100. The external device further comprises a display 150. The display 150 may be configured to display information related to the measurements performed by the surveying instrument 100 to a user. The external device 180 may be in communicative contact with one or more components of the surveying instrument 100, such as the optical device 120 and the processing unit 140.

In an example, the optical device 120 may comprise an imaging unit 126, as illustrated in Fig.2, configured to generate an image of a field of view of the surveying instrument 100, along the optical axis of the center unit 110. In the predetermined rotational position P1 of the center unit 110, as shown in Fig. 4, the imaging unit may generate an image of the ground surface 210 (and the ground mark M) below the surveying instrument 100. Light reflected by, e.g., the ground surface, may enter the through-hole 174 of the tribrach 172 and the aperture 138 of the alidade 130. The light may be guided along the optical path to the front lens of the center unit 110 to reach the imaging unit in the center unit 110. The imaging unit may generate an image that may be displayed on the display 150 of the external device 180. The generated image may indicate a relation between the second axis A2 of the surveying instrument 100 and the ground mark M. For example, the display 150 may comprise a crosshair and/or a crosshair may be inserted in the generated image, e.g., by the processing unit 140, wherein the crosshair indicates the location of the second axis A2. In an example, the imaging unit may be configured to generate a sequence of images, and/or a live stream (or video), that may be shown on the display 150. A user may thereby see the position of the second axis A2, indicated by e.g., a crosshair, in the sequence of images and/or in the live stream in real time on the display 150.

In this way, the imaging unit may act as a camera plummet indicating the location of the second axis A2 on the ground surface 210. A user may position the surveying instrument 100 in relation to the ground mark M based on the generated image. For example, if the crosshair is located beside (next to) the ground mark M in the image, the user may adjust the horizontal position of the surveying instrument 100 such that the crosshair and the ground mark M align, i.e., the crosshair is positioned on the ground mark M. The user may adjust the horizontal position by moving the surveying instrument 100, e.g., by moving the tripod 176, and/or by translating the tribrach 172 relative to the tripod 176. If the surveying instrument 100 is levelled, the camera plummet (the crosshair) may indicate a position vertically below a center point of the surveying instrument 100, when the center unit 110 is in the predetermined rotational position P1.

The person skilled in the art realizes that the present invention by no means is limited to the preferred embodiments described above. On the contrary, many modifications and variations are possible within the scope of the appended claims.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A surveying instrument (100) comprising:
a center unit (110) comprising an optical device (120) and a front lens (112), wherein the optical device is arranged to emit and/or receive light through the front lens along an optical axis (OA) of the center unit; and
an alidade (130) on which the center unit is rotatably arranged about a first axis (A1), the alidade comprising a tilt sensor (132) arranged along a second axis (A2), wherein the second axis is orthogonal to the first axis;
wherein the alidade further comprises an optical arrangement (134) arranged to form an optical path (136) from a first side of the alidade to an aperture (138) arranged along the second axis at a second side of the alidade, wherein the optical path bypasses the tilt sensor; and
wherein the center unit is rotatable about the first axis to a predetermined rotational position (P1), in which the optical axis aligns with the optical path such that the optical device is arranged to emit and/or receive light through the aperture along the second axis.

2. The surveying instrument according to claim 1, wherein the optical device comprises a laser source (122) configured to emit a laser beam.

3. The surveying instrument according to claim 2, wherein the laser source forms part of an electronic distance measuring, EDM, unit (124) configured to measure a distance between the surveying instrument and an object based on the emitted laser beam.

4. The surveying instrument according to claim 3, wherein:
the center unit is configured to perform a rotation (R) about the first axis across the predetermined rotational position such that the laser beam emitted by the laser source is transmitted through the optical path and emitted through the aperture in an angular range across (α) the second axis;
and wherein the EDM unit is configured to perform a plurality of distance measurements during the rotation of the center unit to provide a surface profile of the object.

5. The surveying instrument according to any of claims 3 or 4 wherein:
the surveying instrument further comprises a processor (140) in communicative contact with the EDM unit; and
the processor is configured to determine a height (H) of the surveying instrument above a surface below the surveying instrument based on an input received from the EDM unit with the center unit being in the predetermined rotational position.

6. The surveying instrument according to any of the preceding claims, wherein:
the optical device comprises an imaging unit (126); and
the surveying instrument further comprises a display (150) configured to display an image captured by the imaging unit.

7. The surveying instrument according to any of the preceding claims, wherein:
the optical device comprises an imaging unit (126);
the surveying instrument comprises a processor (140) in communicative contact with the imaging unit; and
the processor is configured to determine a horizontal position of the surveying instrument in relation to a mark on a surface below the surveying instrument based on an input received from the imaging unit with the center unit being in the predetermined rotational position.

8. The surveying instrument according to any of the preceding claims, wherein the center unit further comprises a visual channel configured to transmit light entering the front lens along the optical axis to an eyepiece (160).

9. The surveying instrument according to any of the preceding claims, wherein the optical arrangement comprises at least two reflective surfaces arranged to direct the optical path from the first side of the alidade to the aperture.

10. The surveying instrument according to any of the preceding claims, wherein the optical arrangement comprises a beam expander arranged to reduce a width of the optical path from the first side of the alidade to the aperture.

11. The surveying instrument according to any of the preceding claims, wherein the front lens has an optical diameter in the range 25-55 mm.

12. The surveying instrument according to any of the preceding claims, wherein the center unit further comprises an adjustable focus lens (114) configured to adjust a focus of the optical device.

13. The surveying instrument according to any of the preceding claims, wherein the tilt sensor is a liquid-based tilt sensor.

14. The surveying instrument according to any of the preceding claims, wherein the alidade is configured to be attached to a support structure (170) for arranging the surveying instrument above a surface.

15. The surveying instrument according to claim 14, wherein:
the support structure comprises a tribrach (172) including a through-hole (174); and
wherein the alidade is configured to be attached to the tribrach such that the aperture aligns with the through-hole.
